# EUROPEAN PATENT APPLICATION

(11) **EP 4 417 492 A1**
(43) Date of publication of application: **21.08.2024**
(21) Application number: 23156612.6
(22) Date of filing: 14.02.2023
(51) Int. Cl.: B62D 25/08, B60S 1/52

(54) **COWL SYSTEM AND METHOD FOR MANUFACTURING**

(71) Applicant: Röchling Automotive SE, 68165 Mannheim (DE)
(72) Inventor: Maffei, Lukas, 39040 Kurtinig a. d. W. (IT)
(74) Representative: Ullrich & Naumann PartG mbB

(57) **Abstract**

A cowl system (112) for a vehicle (110), positionable between a windshield (114) and hood (120) of the vehicle (110), is disclosed. The cowl system (112) comprises:
- a cowl element (124) comprising at least two snap fit joints (126), wherein the cowl element (124) is connectable to a body sidewall (122) of the vehicle (110) by the at least two snap fit joints (126); and
- at least one fixing element (128) protruding from a surface (130) of the cowl element (124), wherein the fixing element (128) is integrally formed with the cowl element (124), such that the cowl element (124) and the fixing element (128) are manufacturable in one piece, wherein at least one fluid inlet (116) towards at least one windshield wiper (118) of the vehicle (110) is fastenable in the fixing element (128).

Further disclosed are a method for manufacturing at least one cowl system (112), a vehicle (110) and a vehicle manufacturing method.

## Description

### Technical Field

The invention relates to a cowl system for a vehicle as well as to a method for manufacturing at least one cowl system. The invention further relates to a vehicle and a vehicle manufacturing method. The devices and methods according to the present invention may be applied in vehicles, such as in motor vehicles and/or passenger vehicles, e.g. in cars and/or trucks. Specifically, the invention may be used for collecting dirt and/or fluid, e.g. rain water, striking a windshield of a vehicle and for shielding a hood compartment of the vehicle from the dirt and/or fluid, and for providing manufacturing areas and/or arrangements for windshield wipers and/or their fluid inlets. Other applications are feasible, such as in a rear part of the vehicle, for example between a rear window and a trunk of the vehicle.

### Background art

Cowl systems, more particularly cowl systems for vehicles, play an important role in vehicle water management, i.e. for controlling exterior water flow down and around the vehicle. In general, cowl systems comprise multiple components for fulfilling the function of collecting dirt and/or fluid and for mechanically supporting windshield wipers and/or their fluid inlets. Further functions of the cowl systems may be possible, such as draining the collected fluid downwards, i.e. by way of a further component such as one or two drain pipes. In particular, such drain pipes may typically comprise two parts that are welded and/or glued together, e.g. spliced.

CN216783431U describes a ventilation cover plate drainage structure and a vehicle. The ventilation cover plate drainage structure comprises a cover plate body, a drainage opening is formed in the cover plate body, a drainage pipe communicated with the drainage opening is arranged on one side of the cover plate body, and a mounting support used for being connected with a vehicle body is arranged on the drainage pipe. In the described device, the drainage pipe is arranged at the drainage port and extends in the direction close to the ground, so that water drained from the drainage port is effectively prevented from splashing to the electric devices around the drainage port.

Despite the advantages involved in known cowl systems, several technical challenges remain, specifically in view of manufacturing processes. Thus, usually, at least some cowl system components are manufactured in a manufacturing process comprising a forced demolding, increasing the risk for damaged parts, i.e. rejects. Furthermore, the use of multiple components increases assembly complexity and costs in the manufacturing of cowl systems and also in vehicle manufacturing, when installing the cowl system. However, in the vehicle industry, cost is a major factor to be considered and rejects as well as assembly complexity are to be minimized.

### Problem to be solved

It is therefore desirable to provide systems and methods, which address the above-mentioned shortcomings of known systems and methods. Specifically, a cowl system for a vehicle shall be proposed, as well as a corresponding manufacturing method, a vehicle and a vehicle manufacturing method, which allow for a simple assembly and a low reject rate.

### Summary

This problem is addressed by a cowl system for a vehicle, a method for manufacturing at least one the cowl system, a vehicle and a vehicle manufacturing method with the features of the independent claims. Advantageous embodiments, which might be realized in an isolated fashion or in any arbitrary combinations, are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a cowl system for a vehicle is disclosed. The cowl system is positionable between a windshield and hood of the vehicle. The cowl system comprises a cowl element comprising at least two snap fit joints, wherein the cowl element is connectable to a body sidewall of the vehicle by the at least two snap fit joints. Further, the cowl system comprises at least one fixing element protruding from a surface of the cowl element, wherein the fixing element is integrally formed with the cowl element, such that the cowl element and the fixing element are manufacturable in one piece. In the fixing element, at least one fluid inlet towards at least one windshield wiper of the vehicle is fastenable.

The term "vehicle" as used herein is a broad term and is to be given its ordinary and customary meaning to a person of ordinary skill in the art and is not to be limited to a special or customized meaning. The term specifically may refer, without limitation, to an automotive car and/or truck configured for transporting people, animals and/or cargo. The vehicle may specifically be configured for travelling on roads and fields by using tires. The vehicle specifically may comprise at least one hood and at least one windshield, as well as at least one windshield wiper and a fluid inlet towards the windshield wiper.

The term "cowl element" as used herein is a broad term and is to be given its ordinary and customary meaning to a person of ordinary skill in the art and is not to be limited to a special or customized meaning. The term specifically may refer, without limitation, to a flat physical object configured for shielding another entity, such as a protective shield. In particular, the cowl element may be a protecting object arranged and configured for at least partially shielding at least one technical entity arranged below the cowl element from influences and/or direct contact with one or more of wind, fluid, e.g. water, and debris, e.g. dirt carried by the wind. As an example, the cowl element may be or may comprise at least one plastic material, specifically one or more of a thermoplastic material and a thermoplastic-elastomer material.

The function and effect of the individual features of the cowl system according to the invention are described below, whereby the individual features can be realized individually or in any combination according to the invention.

Specifically, the cowl element may comprise at least four snap fit joints, wherein the cowl element may in particular be connectable to the body sidewall of the vehicle by the at least four snap fit joints.

The term "snap fit joint" as used herein is a broad term and is to be given its ordinary and customary meaning to a person of ordinary skill in the art and is not to be limited to a special or customized meaning. The term specifically may refer, without limitation, to a mechanism comprising at least one engaging member and at least one retaining member, wherein the mechanism is configured for establishing a force transmittable connection, when the engaging member and the retaining member engage each other, i.e. by being pushed together. For example, the force transmittable connection may be established by the snap fit joint by snapping and/or closing the engaging member into the retaining member, e.g. by pushing them together.

The cowl element comprising the at least two snap fit joints, particularly refers to either the engaging member or the retaining member of each of the snap fit joints being part of the cowl element, i.e. being integrally formed with the cowl element, wherein the other one of the engaging member or the retaining member of the snap fit joints may be part of the body sidewall of the vehicle. Specifically, of the body sidewall of the vehicle the cowl element is connectable to via the snap fit joints.

The term "connectable" as used herein is a broad term and is to be given its ordinary and customary meaning to a person of ordinary skill in the art and is not to be limited to a special or customized meaning. The term specifically may refer, without limitation, to a potentially established connected, such as to a connection that depends on an occurrence of a further event. Thus, the term "the cowl element is connectable to a body sidewall of the vehicle by the at least two snap fit joints" refers to a potential connection between the cowl element and the body sidewall of the vehicle, depending on the occurrence of the snapping and/or closure of the snap fit joints.

The term "fixing element" as used herein is a broad term and is to be given its ordinary and customary meaning to a person of ordinary skill in the art and is not to be limited to a special or customized meaning. The term specifically may refer, without limitation, to a fixating means, configured for mechanically holding and/or fixating at least one object to be held and/or fastened. In particular, the fixing element may be configured for holding the object by one or more of a form-fit connection and a force-fit connection. As an example, the fixing element may comprise a specific shape and/or form and/or material for mechanically holding another object by interacting with the shape and/or form of the object to be held and/or fastened.

In particular, the fixing element may have a conical shape and may comprise in its smaller front side, specifically in the side having a smaller diameter, at least one recess, in which for example the fluid inlet is placeable. As an example, the smaller front side may refer to a side of the fixing element having a smaller diameter. Thus, the fixing element may, specifically by its recess, be able to interact with the fluid inlet, such that when the fluid inlet is to be placed in the recess of the fixing element, the fluid inlet is mechanically held and/or fastened to the fixing element.

As an example, the fixing element may comprise at least one protrusion, specifically two protrusions, at an entrance of the recess, such that a width of the recess is smaller on the fixing element's front side than at a bottom of the recess. In particular, in case the fluid inlet is to be placed within the recess with protrusions at its entrance, falling out of the fluid inlet, i.e. by gravity and/or rocking movements of the vehicle, may be prevented by the protrusions.

The fixing element may further comprise a hollow structure having, except for the protrusion at the recess's entrance, a uniform wall thickness. This may particularly be beneficial for a manufacturability of the fixing element being integrally formed with the cowl element.

The cowl system may further comprise at least two cover elements connected to the cowl element. The cover elements may specifically be configured for shielding a hood compartment of the vehicle from coarse debris, such as leaves and branches.

The term "cover elements" as used herein is a broad term and is to be given its ordinary and customary meaning to a person of ordinary skill in the art and is not to be limited to a special or customized meaning. The term specifically may refer, without limitation, to a cover and/or protective object. In particular, the cover elements may be a removable and re-attachable extension of the cowl element, such as for the purpose of allowing for a better and/or easier access, e.g. when performing maintenances and/or repairs on the vehicle.

The snap fit joints may for example be reusable, specifically at least 10 times. Thus, at least one of the snap fit joints may specifically be a releasable and/or reusable snap fit j oint, such as a snap fit joint configured for repeated assembly and dismantling performances without function-restricting damage. In particular, at least one of the engaging member and the retaining member of such a releasable and/or reusable snap fit joint may be flexible, i.e. performing a reversible elastic deformation when the engaging member is snapped into the retaining member.

In particular, the cowl element may comprise at least two different types of snap fit joints. Specifically, at least one of the snap fit joints may be different from at least one other one of the snap fit joints. Thus, as an example, the snap fit joints of the cowl element may differ from each other in their form and/or function. Particularly, the snap fit joints may differ from each other by exhibiting different shapes, such as by the engaging member and/or the retaining member of at least one of the snap fit joints being formed different from the engaging member and/or the retaining member of another one of the snap fit joints.

As an example, the snap fit joints of the cowl element may be one or more of a cantilever snap fit j oint, such as a single-cantilever snap fit joint or a multi-cantilever snap fit j oint, e.g. a double-cantilever snap fit joint; an annular snap fit joint; a ball snap fit joint; a cylinder snap fit joint.

The snap fit joints may particularly be positioned such that the cowl element is connectable to the body sidewall of the vehicle in a press fit. Specifically, the snap fit joints may be positioned on the cowl element such that in a connected position, e.g. a position in which the cowl element is connected to the body sidewall of the vehicle, a preload is applied to the cowl system increasing a press force of the sealing lip against the windshield of the vehicle and/or a press force of a side of the cowl element against the sidewalls of the vehicle.

In particular, the cowl system may comprise at least two arms that reach up to over 5% of a height of the windshield. Specifically, the at least two arms may reach up to over 10% of the height of the windshield. More specifically, the at least two arms may reach up to over 20% of the height of the windshield. More specifically, the at least two arms may reach up to over 30% of the height of the windshield. More specifically, the at least two arms may reach up to over 40% of the height of the windshield. At least one snap fit joint may be positioned on each of these arms, specifically in an upper third of the arms. In particular, the two arms may be positioned on opposing sides of the cowl element and may preferably be integrally formed with the cowl element. Thus, as an example, the two arms and the cowl element may be manufactured in one piece.

A position of the snap fit joints, e.g. on the cowl system, may specifically deviate from a nominal position, such as from a fitting position.

The term "nominal position" as used herein is a broad term and is to be given its ordinary and customary meaning to a person of ordinary skill in the art and is not to be limited to a special or customized meaning. The term specifically may refer, without limitation, to a position that is mathematically expected when considered in an ideal and/or predefined environment. As an example, the nominal position, such as the nominal position of the snap fit joints, may be determined based on the assumption of a perfectly manufactured cowl element, i.e. without manufacturing tolerances, and/or of a steady temperature, i.e. room temperature, etc.

The desired position of the snap fit joints, however, may deviate from the nominal position, specifically from the nominal position of the snap fit joints. In particular, the relative position between snap fit joints and their retaining members may be shifted in order to intentionally induce a deformation of the cowl element arms when the cowl element is connected to the vehicle, i.e. to the body sidewall of the vehicle. This deformation leaning and/or aiming towards the windshield may specifically have the purpose to increase a contact pressure of at least one soft component lip, i.e. at least one sealing lip, which may be present on the respective arms of the cowl element, against the windshield of the vehicle, and may thus increase the pressure in a contact of the lip with the windshield.

In a travel direction of the vehicle, the position of the snap fit joints may deviate from the nominal position by a deviation Δx of 0.1 mm ≤ Δx ≤ 1.8 mm. Specifically, the position of the snap fit joints may deviate from the nominal position in a travel direction of the vehicle by 0.3 mm ≤ Δx ≤ 1 mm. More specifically, the position of the snap fit joints may deviate from the nominal position in a travel direction of the vehicle by 0.4 mm ≤ Δx ≤ 0.6 mm. As an example, the position of the snap fit joints may deviate from the nominal position in a travel direction of the vehicle by Δx = 0.5mm.

The term " travel direction of the vehicle" as used herein is a broad term and is to be given its ordinary and customary meaning to a person of ordinary skill in the art and is not to be limited to a special or customized meaning. The term specifically may refer, without limitation, to a direction of usual travel of the vehicle, i.e. in a direction the vehicle is moving when driven forward and in a straight line.

In a direction parallel to a wheel axis of the vehicle, the position of the snap fit joints deviates from the nominal position by a deviation Δy of 0.1 mm ≤ Δy ≤ 2 mm, Specifically, the position of the snap fit joints deviates from the nominal position in a direction parallel to a wheel axis of the vehicle by 0.3 mm ≤ Δy ≤ 1.7 mm. More specifically, the position of the snap fit joints deviates from the nominal position in a direction parallel to a wheel axis of the vehicle by 0.8 mm ≤ Δy ≤ 1.2 mm. As an example, the position of the snap fit joints deviates from the nominal position in a direction parallel to a wheel axis of the vehicle by Δy = 1 mm.

The term " direction parallel to a wheel axis of the vehicle" as used herein is a broad term and is to be given its ordinary and customary meaning to a person of ordinary skill in the art and is not to be limited to a special or customized meaning. The term specifically may refer, without limitation, to a direction parallel to a straight line between the central turning points of two wheels of the same axis of the vehicle, when the vehicle is driven in a straight line.

The cowl system further comprises at least one drainage channel, specifically at least two drainage channels, connected to the cowl element. The at least one drainage channel comprises at least two complementary channel parts, each comprising at least one connecting element for interconnecting the channel parts via at least one snap connection, specifically to form the drainage channel. In particular, the at least one snap connection for interconnecting the channel parts may be or may comprise at least one snap fit joint.

The term "drainage channel" as used herein is a broad term and is to be given its ordinary and customary meaning to a person of ordinary skill in the art and is not to be limited to a special or customized meaning. The term specifically may refer, without limitation, to a pipe element configured for guiding liquids, such as water, in a predefined direction. Specifically, the drainage channel may be configured for guiding liquid that is collected by the cowl element towards at least one wheel box of the vehicle. The drainage channel may specifically be or may comprise at least two interconnected, complementary channel parts.

The term " complementary channel parts" as used herein is a broad term and is to be given its ordinary and customary meaning to a person of ordinary skill in the art and is not to be limited to a special or customized meaning. The term specifically may refer, without limitation, to two halves of a drainage channel having complementary connecting surfaces. In particular, the surface of one of the complementary channel parts, i.e. of one of the two halves, may at least partially comprise a negative form of the surface of the other one of the complementary channel parts, i.e. of the other one of the two halves. Thus, an interface of the two channel parts may be complementarily formed. In particular, the complementary channel parts may form the drainage channel, when interconnected, i.e. when assembled and connected such that forces are transmittable between the two halves.

In particular, the drainage channel may comprise at least two parts, one upper drainage channel part and at least one lower drainage channel part. The lower drainage channel part may specifically be connected to the cowl element via the upper drainage channel part. As an example, each of the upper and the lower drainage channel parts may comprise at least two complementary channel parts. As a further example, the two parts, upper drainage channel part and lower drainage channel part, may be connected to each other by snap connections, such as by at least one snap fit connection.

In case the cowl system comprises at least two drainage channels, the two drainage channels may specifically be symmetrically arranged on two opposing sides of the cowl element.

In a further aspect of the present invention, a method for manufacturing at least one cowl system is disclosed. The method comprises the following step:
a) molding the cowl element and the fixing element in one molding process by using at least one cowl cavity molding tool, e.g. a cowl matrix.

For possible definitions and options, reference may be made to the description of the cowl system as given above or as further described below. The method may specifically be configured for manufacturing the cowl system as described above or as further described below.

In particular, the molding of step a) may be one or more of an injection molding process, such as a multi-component injection molding process, e.g. a two-component injection molding process; a compression molding process; a transfer molding process; a thermoforming process.

In case the molding process is a two-component injection molding process, the molding process may specifically comprise subsequent injection of a body material forming the at least two snap fit joints and of a seal material forming a sealing lip.

The cowl cavity molding tool may comprise two cavity halves. Specifically, the cowl cavity molding tool may comprise two cavity halves that may be configured to be assembled to generate the cowl cavity at an interface of the two cavity halves. Further, the two cavity halves of the cowl cavity molding tool may be configured to be disassembled for deforming the molded cowl element and the fixing element in one piece.

The method, besides step a) in one or more of the forms as outlined above, may comprise further steps. The steps may specifically be performed in the given order. Still, a different order is possible. The method may comprise additional steps which are not mentioned. It is further possible to perform one or more or all of the method steps repeatedly. Further, two or more of the method steps may be performed simultaneously or in a timely overlapping fashion.

The manufacturing method may further comprise:
b) molding at least two complementary channel parts in at least one molding process by using two channel cavity molding tools, e.g. two channel parts matrices; and
c) snap connecting the two complementary channel parts, thereby generating the drainage channel; and
d) connecting the drainage channel to the cowl element.

In particular, the molding process of step b) may be one or more of an injection molding process, such as a single-component injection molding process; a compression molding process; a transfer molding process; a thermoforming process.

In case the molding process is a single-component injection molding process, the molding process may specifically comprise:
- injecting a first part material into the first channel cavity molding tool, thereby integrally forming a first one of the two complementary channel parts; and
- injecting a second part material into the second channel cavity molding tool, thereby integrally forming a second one of the two complementary channel parts.

The first part material and the second part material may for example comprise the same materials. Specifically, the first and second part materials may be the same materials, in particular a thermoplastic material.

The two channel cavity molding tools may each comprise two cavity halves. Specifically, the two channel cavity molding tools may each comprise two cavity halves that may be configured to be assembled to generate at least one of the channel cavities at an interface of the two cavity halves. Further, the two cavity halves of each of the two channel cavity molding tools may be configured to be disassembled for deforming the at least one molded channel part.

The manufacturing method may further comprise:
e) molding at least two cover elements in at least one molding process by using at least one cover cavity molding tool, e.g. at least one, specifically two, cover cavity matrices; and
f) connecting the cover elements to the cowl element.

In particular, the molding process of step e) may be one or more of an injection molding process, such as a single-component injection molding process; a compression molding process; a transfer molding process; a thermoforming process.

In case the molding process is a single-component injection molding process, the molding process may specifically injecting a cover material into the at least one cover cavity molding tool, thereby, for example, integrally forming at least one of the at least two cover elements.

The at least one cover cavity molding tool may comprise two cavity halves. Specifically, the at least one cover cavity molding tool may comprise two cavity halves that are configured to be assembled to generate the cover cavity at an interface of the two cavity halves. Further, the two cavity halves of the at least one cover cavity molding tool may be configured to be disassembled for deforming the cover element.

In a further aspect of the present invention, a vehicle is disclosed. The vehicle comprises a windshield, at least one fluid inlet configured for transporting fluid towards at least one windshield wiper, a hood, two body sidewalls and at least one cowl system. The cowl system is positioned between the windshield and the hood of the vehicle, wherein the cowl system is connected to the body sidewalls via the cowl system's snap fit joints and wherein the at least one fluid inlet is fastened in the fixing element, i.e. in the fixing element of the cowl system.

In particular, the at least one cowl system may specifically be a cowl system as described above or as further described below. Thus, for possible definitions and options, reference may be made to the description of the cowl system as given above or as further described below.

In yet a further aspect of the present invention, a vehicle manufacturing method configured for manufacturing at least one vehicle is disclosed. The method comprises the steps disclosed in the following. The steps may specifically be performed in the given order. Still, a different order is possible. The method may comprise additional steps that are not mentioned. It is further possible to perform one or more or all of the method steps repeatedly. Further, two or more of the method steps may be performed simultaneously or in a timely overlapping fashion.

The vehicle manufacturing method comprises:
A) performing the method for manufacturing at least one cowl system as described above or as further described below;
B) snap fit connecting the cowl system to the two body sidewalls of the vehicle, thereby pressing a sealing lip of the cowl system onto the windshield of the vehicle; and
C) fastening, in the fixing element, at least one fluid inlet of the vehicle configured for transporting fluid towards at least one windshield wiper, e.g. by placing the fluid inlet in at least one recess of the fixing element.

For possible definitions and options, reference may be made to the description of the cowl system and/or the vehicle as given above or as further described below. The vehicle manufacturing method may specifically be configured for manufacturing the vehicle as described above or as further described below.

The proposed cowl system, manufacturing method, vehicle and vehicle manufacturing method provide a large number of advantages over known methods and devices of similar kind.

In particular, the proposed cowl system may act as an interface between the windshield and an engine area of the vehicle and may be more efficient than known systems in deflecting fluids, e.g. water, specifically penetrating water, to protect electrical equipment and other underlying components from moisture. Specifically, by integrally forming the fixing element with the cowl element, in the present cowl system, no boundaries and thus potential ports of entry for penetrating water may be present. Thus, the proposed cowl system and vehicle may be more efficient and secure in preventing fluids from penetrating into the vehicle than known systems and vehicles.

Furthermore, the proposed cowl system and vehicle, by having snap fit joints, may provide for a tight fit of the cowl system to the body sidewall of the vehicle, e.g. to a body side panel, while at the same time allowing for a repeated disassembly without function-impairing damage. Thus, the proposed cowl system and vehicle may be more sturdy and resistant and therefore provide a higher longevity than known systems and vehicles.

In addition, the proposed methods for manufacturing a cowl system and a vehicle may allow for a more efficient and resource-conserving production than known methods. Specifically, the fixing element being integrally formed with the cowl element may allow for a less energy consuming production and manufacturing than systems with multiple separate elements. Further, the fixing element, e.g. by being integrally formed with the cowl element and/or by its uniform wall thickness, may allow manufacturing with a reduced use of material, while at the same time providing for its full functionality, i.e. by ensuring the fixing element's supporting and fixing function. In particular, the cowl cavity molding tool may reduce manufacturing time and complexity, such as by only comprising two cavity halves, e.g. thereby allowing an inner area to be demolded downward in a main demolding direction and an outer area upward, wherein no additional sliders may be required and no forced demolding may be necessary. Thus, the quality of the vehicle's components, such as of the cowl system, may be increased by reducing a risk of damage during demolding. Further, a longevity and durability of the molding tools may be increased, due to less strain on the tools during production. Furthermore, the manufacturing processes may be much simpler than known manufacturing processes.

Further, an interface between the two complementary channel parts of the drainage channel, e.g. between the two half shells of the water drainage channel, may ensure that water flowing downwards may not escape. This joining of channel parts specifically seems to make it possible to, without compromising the function, switch to a simple assembly and thus to a more favorable manufacturing process, e.g. compared to a welding process with seems to be more complex and dangerous.

Furthermore, the proposed cowl systems, vehicles and their manufacturing methods may be more cost efficient that known systems, vehicles and methods. In particular, the number of elements in the vehicle may be reduced compared to known vehicles, thereby reducing assembling and manufacturing costs.

Summarizing and without excluding further possible embodiments, the following embodiments may be envisaged:
Embodiment 1: A cowl system for a vehicle, positionable between a windshield and hood of the vehicle and comprising:
   - a cowl element comprising at least two, specifically at least four, snap fit joints, wherein the cowl element is connectable to a body sidewall of the vehicle by the at least two snap fit joints; and
   - at least one fixing element protruding from a surface of the cowl element, wherein the fixing element is integrally formed with the cowl element, such that the cowl element and the fixing element are manufacturable in one piece, wherein at least one fluid inlet towards at least one windshield wiper of the vehicle is fastenable in the fixing element.
Embodiment 2: The cowl system according to the preceding embodiment, wherein the fixing element has a conical shape and comprises in its smaller front side, specifically in the side having a smaller diameter, at least one recess, in which for example the fluid inlet is placeable.
Embodiment 3: The cowl system according to the preceding embodiment, wherein the fixing element comprises at least one protrusion, specifically two protrusions, at an entrance of the recess, such that a width of the recess is smaller on the fixing element's front side than at a bottom of the recess.
Embodiment 4: The cowl system according to the preceding embodiment, wherein the fixing element comprises a hollow structure having, except for the protrusion at the recess's entrance, a uniform wall thickness.
Embodiment 5: The cowl system according to any one of the preceding embodiments, further comprising at least two cover elements connected to the cowl element and configured for shielding a hood compartment of the vehicle from coarse debris, such as leaves and branches.
Embodiment 6: The cowl system according to any one of the preceding embodiments, wherein the snap fit joints are reusable, specifically at least 10 times.
Embodiment 7: The cowl system according to any one of the preceding embodiments, wherein the cowl element comprises at least two different types of snap fit joints.
Embodiment 8: The cowl system according to any one of the preceding embodiments, wherein the snap fit joints of the cowl element are one or more of: a cantilever snap fit joint, such as a single-cantilever snap fit joint or a multi-cantilever snap fit joint, e.g. a double-cantilever snap fit j oint; an annular snap fit j oint; a ball snap fit j oint; a cylinder snap fit joint.
Embodiment 9: The cowl system according to any one of the preceding embodiments, wherein the cowl element comprises at least one sealing lip configured to be pressed against the windshield of the vehicle.
Embodiment 10: The cowl system according to any one of the preceding embodiments, wherein the snap fit joints are positioned such that the cowl element is connectable to the body sidewall of the vehicle in a press fit, specifically such that in a connected position a preload is applied to the cowl system increasing a press force of the sealing lip against the windshield of the vehicle and/or a press force of a side of the cowl element against the sidewalls of the vehicle.
Embodiment 11: The cowl system according to the preceding embodiment, wherein the cowl system comprises at least two arms that reach up to over 5%, specifically over 10%, more specifically over 20%, more specifically over 30%, more specifically over 40%, of a height of the wind shield, wherein at least one snap fit joint is positioned on each of these arms, specifically in upper third of the arms.
Embodiment 12: The cowl system according to any one of the two preceding embodiments, wherein a position of the snap fit joints deviates from a nominal position, such as from a fitting position.
Embodiment 13: The cowl system according to the preceding embodiment, wherein in a travel direction of the vehicle, the position of the snap fit joints deviates from the nominal position by a deviation Δx of 0.1 mm ≤ Δx ≤ 1.8 mm, specifically 0.3 mm ≤ Δx ≤ 1 mm, more specifically 0.4 mm ≤ Δx ≤ 0.6 mm, more specifically Δx = 0.5mm.
Embodiment 14: The cowl system according to the preceding embodiment, wherein in a direction parallel to a wheel axis of the vehicle, the position of the snap fit joints deviates from the nominal position by a deviation Δy of 0.1 mm ≤ Δy ≤ 2 mm, specifically 0.3 mm ≤ Δy ≤ 1.7 mm, more specifically 0.8 mm ≤ Δy ≤ 1.2 mm, more specifically Δy = 1 mm.
Embodiment 15: The cowl system according to any one of the preceding embodiments, further comprising at least one drainage channel, specifically at least two drainage channels, connected to the cowl element and comprising at least two complementary channel parts each comprising at least one connecting element for interconnecting the channel parts via at least one snap connection, specifically to form the drainage channel.
Embodiment 16: The cowl system according to the preceding embodiment, wherein the drainage channel comprises at least two parts, one upper drainage channel part and at least one lower drainage channel part, wherein the lower drainage channel part is connected to the cowl element via the upper drainage channel part, specifically each of the upper and the lower drainage channel parts comprise at least two complementary channel parts.
Embodiment 17: The cowl system according to any one of the two preceding embodiments, wherein the at least two drainage channels are symmetrically arranged on two opposing sides of the cowl element.
Embodiment 18: A method for manufacturing at least one cowl system according to any one of the preceding embodiments referring to a cowl system, the method comprising
   a) molding the cowl element and the fixing element in one molding process by using at least one cowl cavity molding tool, e.g. a cowl matrix.
Embodiment 19: The method according to the preceding embodiment, wherein the molding process of step a) is one or more of an injection molding process, such as a multi-component injection molding process, e.g. a two-component injection molding process; a compression molding process; a transfer molding process; a thermoforming process.
Embodiment 20: The method according to the preceding embodiment, wherein in case the molding process is a two-component injection molding process, the molding process comprises subsequent injection of a body material forming the at least two snap fit joints and of a seal material forming a sealing lip.
Embodiment 21: The method according to any one of the two preceding embodiments, wherein the cowl cavity molding tool comprises two cavity halves, specifically two cavity halves that are configured to be assembled to generate the cowl cavity at an interface of the two cavity halves and that are configured to be disassembled for deforming the molded cowl element and the fixing element in one piece.
Embodiment 22: The method according to any one of the preceding embodiments referring to a manufacturing method, further comprising
   b) molding at least two complementary channel parts in at least one molding process by using two channel cavity molding tools, e.g. two channel parts matrices; and
   c) snap connecting the two complementary channel parts, thereby generating the drainage channel; and
   d) connecting the drainage channel to the cowl element.
Embodiment 23: The method according to the preceding embodiment, wherein the molding process of step b) is one or more of an injection molding process, such as a single-component injection molding process; a compression molding process; a transfer molding process; a thermoforming process.
Embodiment 24: The method according to the preceding embodiment, wherein in case the molding process is a single-component injection molding process, the molding process comprises
   - injecting a first part material into the first channel cavity molding tool, thereby integrally forming a first one of the two complementary channel parts; and
   - injecting a second part material into the second channel cavity molding tool, thereby integrally forming a second one of the two complementary channel parts.
Embodiment 25: The method according to the preceding embodiment, wherein the first part material and the second part material comprise the same materials, specifically the first and second part materials are the same materials, in particular a thermoplastic material.
Embodiment 26: The method according to any one of the four preceding embodiments, wherein the two channel cavity molding tools each comprise two cavity halves, specifically two cavity halves that are configured to be assembled to generate at least one of the channel cavities at an interface of the two cavity halves and that are configured to be disassembled for deforming the at least one molded channel part.
Embodiment 27: The method according to any one of the preceding embodiments referring to a manufacturing method, further comprising
   e) molding at least two cover elements in at least one molding process by using at least one cover cavity molding tool, e.g. at least one, specifically two, cover cavity matrices; and
   f) connecting the cover elements to the cowl element.
Embodiment 28: The method according to the preceding embodiment, wherein the molding process of step e) is one or more of an injection molding process, such as a single-component injection molding process; a compression molding process; a transfer molding process; a thermoforming process.
Embodiment 29: The method according to the preceding embodiment, wherein in case the molding process is a single-component injection molding process, the molding process comprises injecting a cover material into the at least one cover cavity molding tool, thereby integrally forming at least one of the at least two cover elements.
Embodiment 30: The method according to any one of the three preceding embodiments, wherein the at least one cover cavity molding tool comprises two cavity halves, specifically two cavity halves that are configured to be assembled to generate the cover cavity at an interface of the two cavity halves and that are configured to be disassembled for deforming the cover element.
Embodiment 31: A vehicle comprising a windshield, at least one fluid inlet configured for transporting fluid towards at least one windshield wiper, a hood, two body sidewalls and at least one cowl system according to any one of the preceding embodiments referring to a cowl system, wherein the cowl system is positioned between the windshield and the hood of the vehicle, wherein the cowl system is connected to the body sidewalls via the cowl system's snap fit joints and wherein the at least one fluid inlet is fastened in the fixing element.
Embodiment 32: A vehicle manufacturing method configured for manufacturing at least one vehicle according to the preceding embodiment, comprising
   A) performing the method for manufacturing at least one cowl system according to any one of the preceding method embodiments;
   B) snap fit connecting the cowl system to the two body sidewalls of the vehicle, thereby pressing a sealing lip of the cowl system onto the windshield of the vehicle; and
   C) fastening, in the fixing element, at least one fluid inlet of the vehicle configured for transporting fluid towards at least one windshield wiper, e.g. by placing the fluid inlet in at least one recess of the fixing element.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a vehicle comprising an embodiment of a cowl system in a schematic side view;
- Figure 2: shows an embodiment of a cowl system for a vehicle in a perspective view;
- Figures 3A to 3F: show partial views of an embodiment of a cowl system in perspective views (3A to 3C) and in sectional views (3D to 3F);
- Figures 4A to 4D: show partial views of an embodiment of a cowl system in perspective views (4A and 4B) and in sectional views (4C and 4D)
- Figures 5A to 5F: show partial views of an embodiment of a cowl system in perspective views (5A and 5B) and in sectional views (5C to 5F);
- Figures 6A and 6B: show different flow charts of a method for manufacturing at least one cowl system; and
- Figure 7: shows a flow chart of a vehicle manufacturing method.

### Detailed description of the embodiments

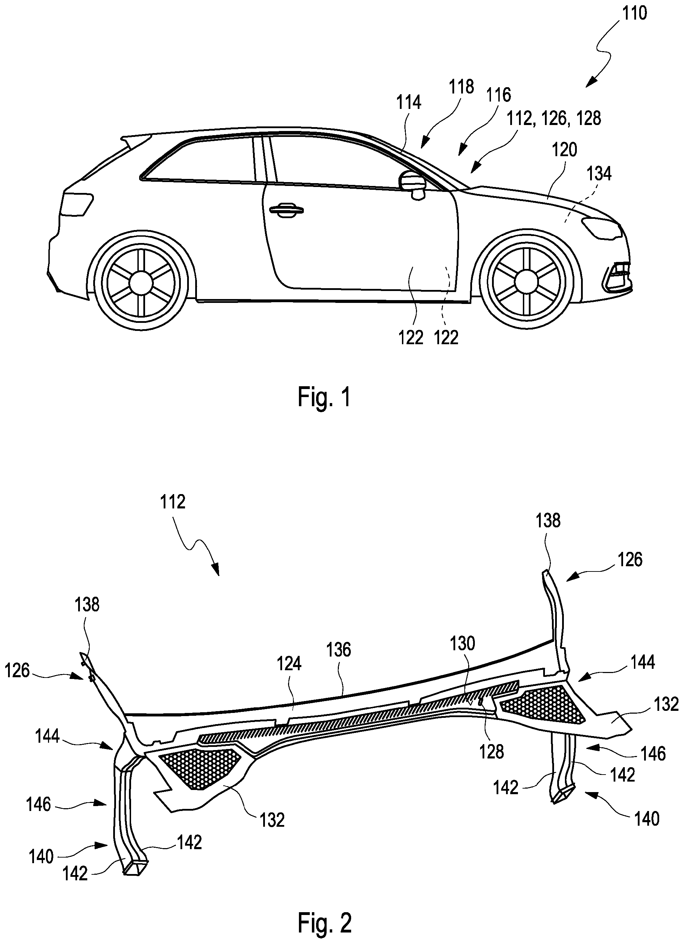

In Figure 1, an embodiment of a vehicle 110 comprising an embodiment of a cowl system 112 is illustrated in a schematic side view. The vehicle 110 comprises a windshield 114, at least one fluid inlet 116 configured for transporting fluid towards at least one windshield wiper 118, a hood 120, two body sidewalls 122 and the at least one cowl system 112 positioned between the windshield 114 and the hood 120 of the vehicle 110.

An embodiment of the cowl system 112 is illustrated in Figure 2 in a perspective view. The cowl system 112, as outlined above with respect to the vehicle 110 illustrated in Figure 1, is positionable between the windshield 114 and the hood 120 of the vehicle 110. The cowl system 112 comprises a cowl element 124 comprising at least two snap fit joints 126, wherein the cowl element 124 is connectable to the body sidewall 122 of the vehicle 110 by the at least two snap fit joints 126. Further, the cowl system 112 comprises at least one fixing element 128 protruding from a surface 130 of the cowl element 124. The fixing element 128 is integrally formed with the cowl element 124, such that the cowl element 124 and the fixing element 128 are manufactured or at least manufacturable in one piece. Furthermore, the at least one fluid inlet 116 towards the at least one windshield wiper 118 of the vehicle 110 is fastenable in the fixing element 128.

In the vehicle 110 exemplarily illustrated in Figure 1, the cowl system 112 is connected to the body sidewalls 122 via the cowl system's snap fit joints 126 and the at least one fluid inlet 116 is fastened in the fixing element 128.

The cowl system 112 may further comprise at least two cover elements 132 connected to the cowl element 124 and configured for shielding a hood compartment 134 of the vehicle 110 from coarse debris, such as from leaves and branches. Furthermore, the cowl system 112 may comprise at least one sealing lip 136 configured to be pressed against the windshield 114 of the vehicle 110. The cowl system 112 may specifically comprise at least two arms 138, e.g. on opposing sides of the cowl element 124, that may reach up to over 5% of the height of the windshield 114. Specifically, at least one of the snap fit joints 126 may be positioned one each of the arms 138. Additionally or alternatively, the cowl system 112 may comprise at least one drainage channel 140, specifically two drainage channels 140. The drainage channel 140 may be connected to the cowl element 124. The drainage channel 140 may comprise at least two complementary channel parts 142 forming the drainage channel 140. Further, the drainage channel 140 may comprise at least two parts, one upper drainage channel part 144 and at least one lower drainage channel part 146. The lower drainage channel part 146 may for example be connected to the cowl element 124 via the upper drainage channel part 144. Specifically, each of the upper and the lower drainage channel parts may comprise at least two complementary channel parts 142. In particular, two drainage channels 140 may be arranged symmetrically on two opposing sides of the cowl element 124.

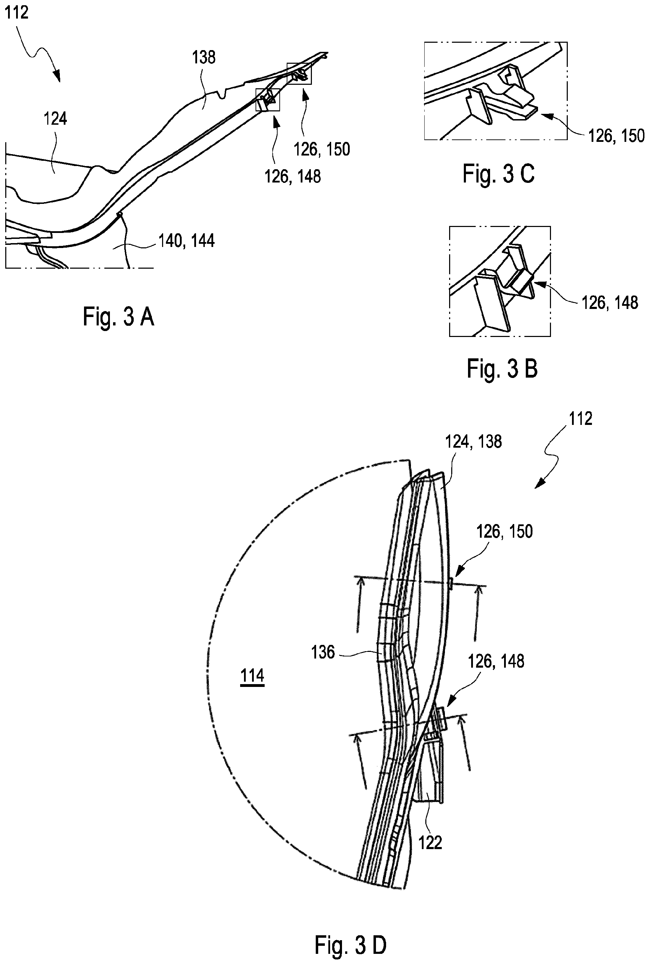

Figures 3A to 3F show partial views of an embodiment of a cowl system 112. In particular, in Figures 3A to 3C, a part of the cowl system 112, specifically of the cowl element 124 and the drainage channel 140, is shown in perspective views. Figures 3B and 3C show enlarged details of the snap fit joints 126 that may be arranged on the arm 138. In particular, the snap fit joint 126 illustrated in Figure 3B may be a single cantilever snap fit joint 148 and the snap fit joint 126 illustrated in Figure 3C may be a double cantilever snap fit joint 150.

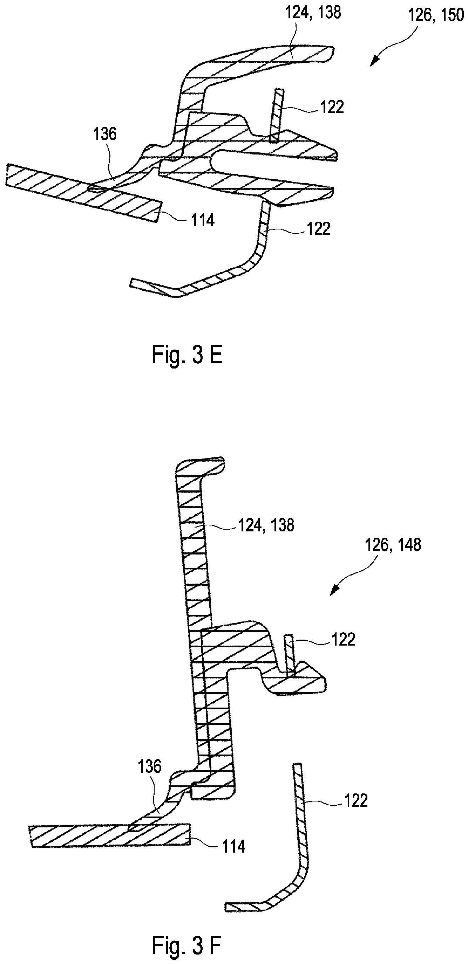

Figure 3D shows a part of an embodiment of the cowl system 112 connected to the body sidewall 122 and positioned on the windshield 114 of the vehicle 110 in a sectional view, specifically showing a free end of the arm 138 of the cowl system 112. Figures 3E and 3F show enlarged sectional views of the cutouts indicated by arrows in two places in Figure 3D. In particular, in Figure 3E, a sectional view of a snap fit joint 126 arranged closer to the end of the arm 138 may be shown, while in Figure 3F, a sectional view of a snap fit joint arranged closer to the cowl element 124 may be shown. In particular, the snap fit joint 126 in Figure 3E may be a double cantilever snap fit joint 150 and the snap fit joint 126 illustrated in Figure 3F may be a single cantilever snap fit joint 148. Specifically, as exemplarily illustrated in Figures 3D to 3F, the snap fit joints 126 may be positioned such that the cowl element 124 is connectable to the body sidewall 122 of the vehicle 110 in a press fit. Specifically, the press fit may be such that in a connected position a preload is applied to the cowl system 112 increasing a press force of the sealing lip 136 against the windshield 144 of the vehicle 110 and/or a press force of a side of the cowl element 124 against the sidewalls 122 of the vehicle 110.

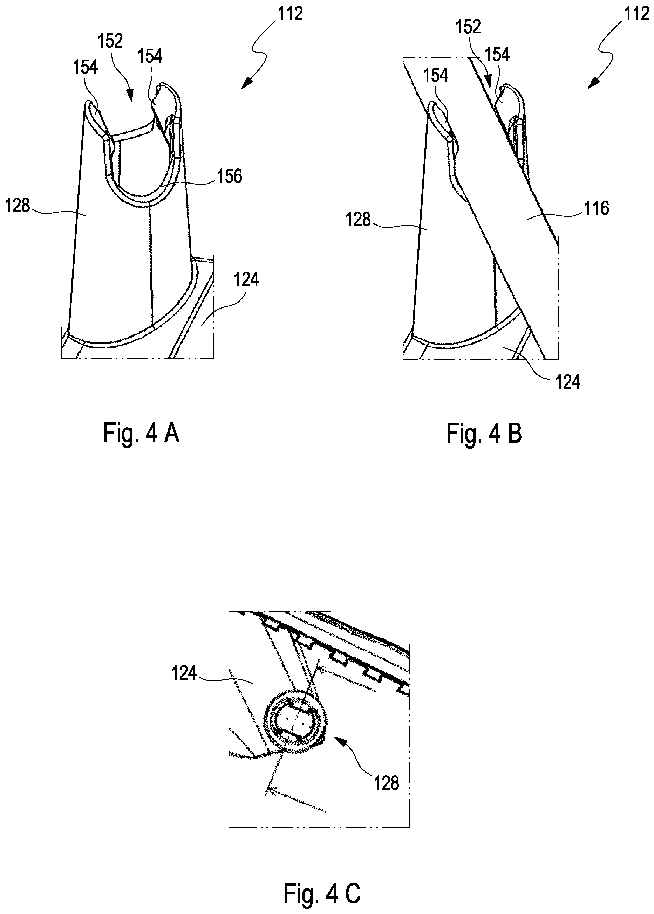

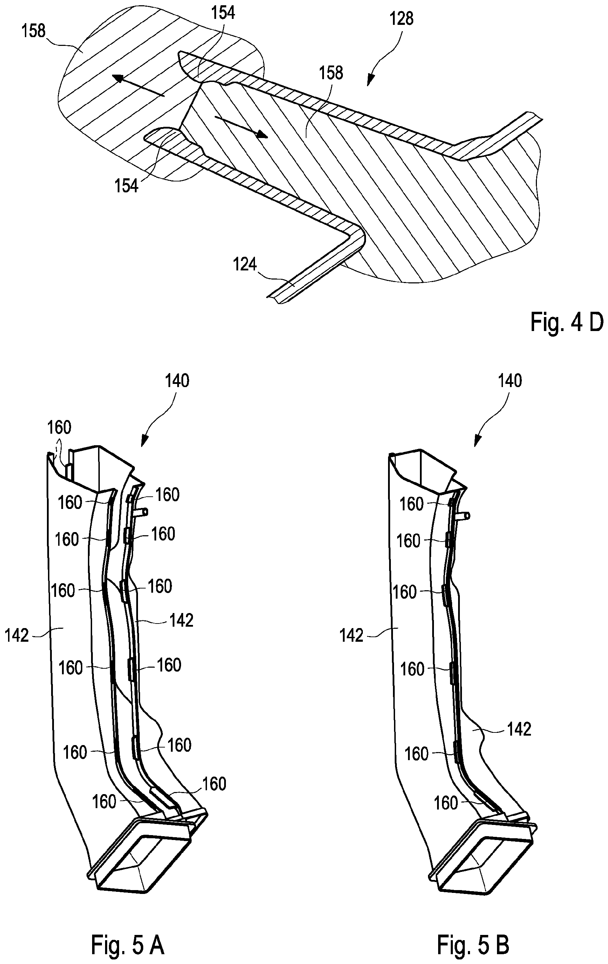

In Figures 4A to 4D, partial views of an embodiment of a cowl system 112 are illustrated, wherein specifically the fixing element 128 may be shown, in perspective views (Figures 4A and 4B) and in sectional views (Figures 4C and 4D). Figure 4D shows an enlarged sectional view of the cutout indicated by arrows in Figure 4C. The fixing element 128 may specifically have a conical shape and may comprise in its smaller front side, at least one recess 152 in which for example the fluid inlet may be placeable. The fixing element 128 may further comprise at least one protrusion 154 at an entrance of the recess 152, such that, for example, a width of the recess 152 is smaller on the fixing element's front side than at a bottom 156 of the recess 152. As an example, the fixing element 128 may comprise a hollow structure having, e.g. except for the protrusions 154 at the recess's entrance, a uniform wall thickness. In Figure 4D, a part of a cowl cavity molding tool 158 for molding the fixing element 128 and the cowl element 112, specifically in one piece, may exemplarily be shown, wherein a direction of demolding may be indicated by arrows.

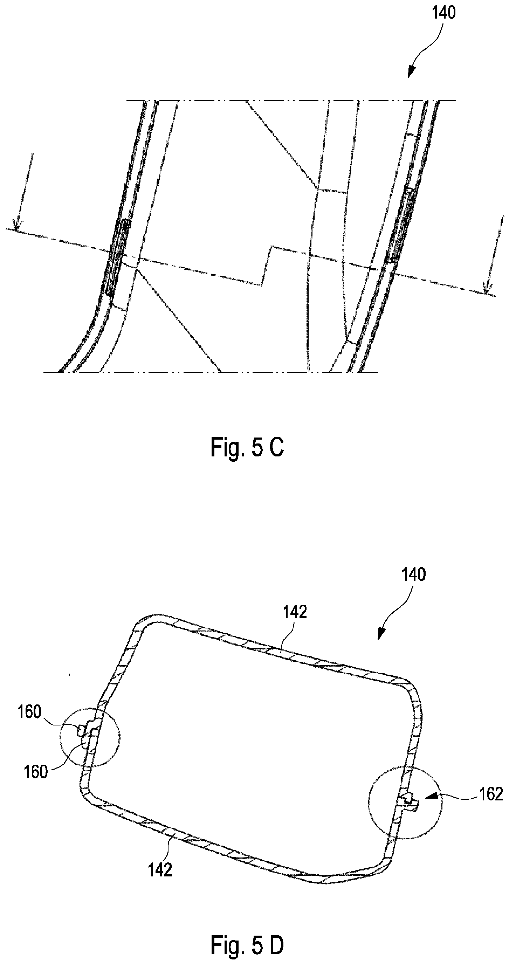

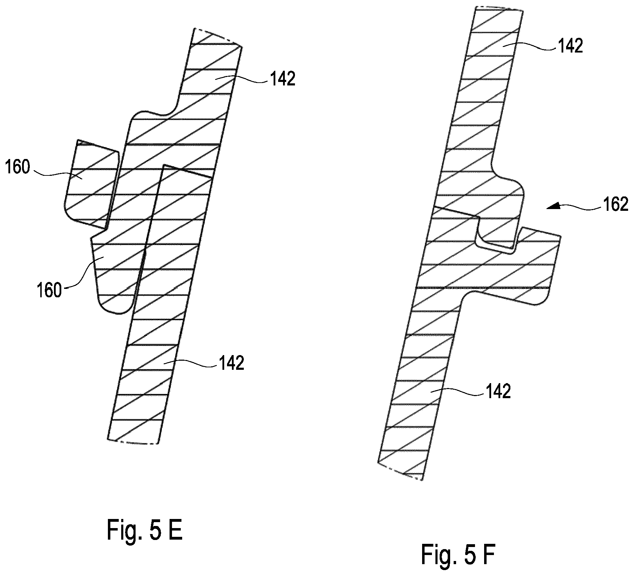

Figures 5A to 5F show partial views of an embodiment of a cowl system 112, wherein specifically the drainage channel 140 may be shown, in perspective views (Figures 5A and 5B) and in sectional views (Figures 5C to 5F). Each of the two complementary channel parts 142 of the drainage channel 140 may comprise at least one connecting element 160, specifically a plurality of connecting elements 160, for interconnecting the channel parts 142 via at least one snap connection, specifically to form the drainage channel 140. Figure 5D shows a sectional view of the cutout indicated by arrows in Figure 5C. Figures 5E shows an enlarged detail of the connecting element 160 of Figure 5D and Figure 5F shows an enlarged detail of an interface 162 between the complementary channel parts 142. Specifically, the connecting element 160 may be configured for interconnecting the channel parts 142 by a snap connection, as exemplarily illustrated in Figure 5E. In particular, the channel parts 142 may have complementary connecting surfaces, i.e. one of the two complementary channel parts 142 may at least partially comprise a negative form of the surface of the other one of the complementary channel parts 142.

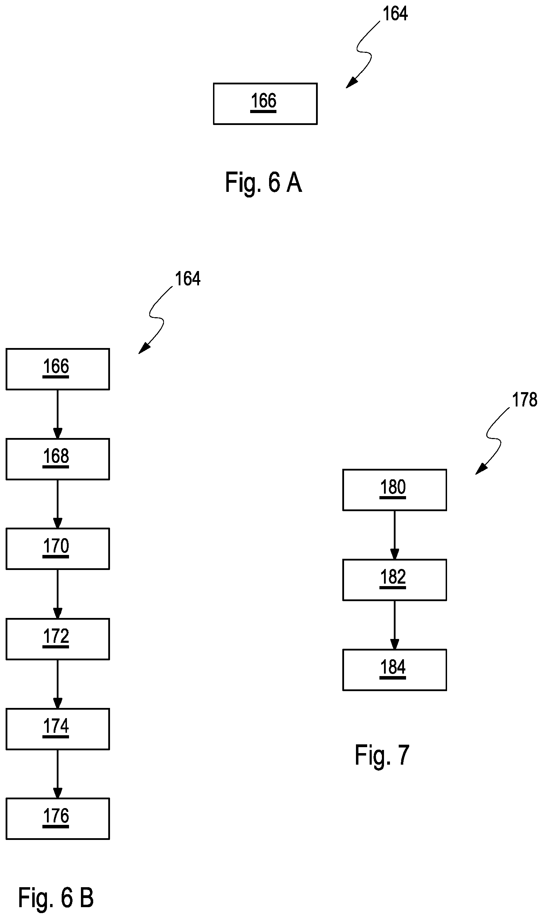

Figures 6A and 6B show different flow charts of a method 164 for manufacturing at least one cowl system 112. The method 164 comprises the following step:
a) (denoted with reference number 166) molding the cowl element (124) and the fixing element (128) in one molding process by using at least one cowl cavity molding tool (158).

As an example, the molding process of step a) may be a two-component injection molding process and may additionally comprises subsequent injection of a body material forming the at least two snap fit joints 126 and of a seal material forming the sealing lip 136.

In particular, the cowl cavity molding tool 158 may comprise two cavity halves that may be configured to be assembled to generate the cowl cavity at an interface of the two cavity halves and that are configured to be disassembled for deforming the molded cowl element (124) and the fixing element (128) in one piece.

The method 164 may further comprise the following steps:
b) (denoted with reference number 168) molding at least two complementary channel parts 142 in at least one molding process by using two channel cavity molding tools; and
c) (denoted with reference number 170) snap connecting the two complementary channel parts 142, thereby generating the drainage channel 140; and
d) (denoted with reference number 172) connecting the drainage channel 140 to the cowl element 124.

Further, the method 164 may comprise the following steps:
e) (denoted with reference number 174) molding at least two cover elements 132 in at least one molding process by using at least one cover cavity molding tool; and
f) (denoted with reference number 176) connecting the cover elements 132 to the cowl element 124.

Figure 7 shows a flow chart of a vehicle manufacturing method 178. The method 178 comprises the following steps:
A) performing the method 164 for manufacturing at least one cowl system 112 as outlined above;
B) snap fit connecting the cowl system 112 to the two body sidewalls 122 of the vehicle 110, thereby pressing a sealing lip 136 of the cowl system 112 onto the windshield 114 of the vehicle 110; and
C) fastening, in the fixing element 128, at least one fluid inlet 116 of the vehicle 110 configured for transporting fluid towards at least one windshield wiper 118.

### List of reference numbers

- 110: vehicle
- 112: cowl system
- 114: windshield
- 116: fluid inlet
- 118: windshield wiper
- 120: hood
- 122: body sidewall
- 124: cowl element
- 126: snap fit joint
- 128: fixing element
- 130: surface of the cowl element
- 132: cover element
- 134: hood compartment
- 136: sealing lip
- 138: arm
- 140: drainage channel
- 142: complementary channel part
- 144: upper drainage channel part
- 146: lower drainage channel part
- 148: single cantilever snap fit joint
- 150: double cantilever snap fit joint
- 152: recess
- 154: protrusion
- 156: bottom
- 158: cowl cavity molding tool
- 160: connecting element
- 162: interface
- 164: method for manufacturing at least one cowl system
- 166: step a)
- 168: step b)
- 170: step c)
- 172: step d)
- 174: step e)
- 176: step f)
- 178: vehicle manufacturing method
- 180: step A)
- 182: step B)
- 184: step C)

## Claims

1. A cowl system (112) for a vehicle (110), positionable between a windshield (114) and hood (120) of the vehicle (110) and comprising:
- a cowl element (124) comprising at least two snap fit joints (126), wherein the cowl element (124) is connectable to a body sidewall (122) of the vehicle (110) by the at least two snap fit joints (126); and
- at least one fixing element (128) protruding from a surface (130) of the cowl element (124), wherein the fixing element (128) is integrally formed with the cowl element (124), such that the cowl element (124) and the fixing element (128) are manufacturable in one piece, wherein at least one fluid inlet (116) towards at least one windshield wiper (118) of the vehicle (110) is fastenable in the fixing element (128).

2. The cowl system (112) according to the preceding claim, wherein the fixing element (128) has a conical shape and comprises in its smaller front side at least one recess (152), in which for example the fluid inlet (116) is placeable.

3. The cowl system (112) according to the preceding claim, wherein the fixing element (128) comprises at least one protrusion (154) at an entrance of the recess (152), such that a width of the recess (152) is smaller on the fixing element's front side than at a bottom (156) of the recess (152).

4. The cowl system (112) according to any one of the preceding claims, further comprising at least two cover elements (132) connected to the cowl element (124) and configured for shielding a hood compartment of the vehicle (110) from coarse debris.

5. The cowl system (112) according to any one of the preceding claims, wherein the cowl element (112) comprises at least two different types of snap fit joints (126).

6. The cowl system (112) according to any one of the preceding claims, wherein the snap fit joints (126) of the cowl element are one or more of a cantilever snap fit joint; an annular snap fit j oint; a ball snap fit j oint; a cylinder snap fit joint.

7. The cowl system (112) according to any one of the preceding claims, wherein the snap fit joints (126) are positioned such that the cowl element (124) is connectable to the body sidewall (122) of the vehicle (110) in a press fit.

8. The cowl system (112) according to the preceding claim, wherein the cowl system (112) comprises at least two arms (138) that reach up to over 5% of a height of the wind shield (114), wherein at least one snap fit joint (126) is positioned on each of these arms (138).

9. The cowl system (112) according to any one of the preceding claims, further comprising at least one drainage channel (140) connected to the cowl element (124) and comprising at least two complementary channel parts (142) each comprising at least one connecting element for interconnecting the channel parts (142) via at least one snap connection.

10. A method for manufacturing at least one cowl system (112) according to any one of the preceding claims referring to a cowl system, the method comprising
a) molding the cowl element (124) and the fixing element (128) in one molding process by using at least one cowl cavity molding tool (158).

11. The method according to the preceding claim, wherein the molding process of step a) is one or more of an injection molding process; a compression molding process; a transfer molding process; a thermoforming process.

12. The method according to any one of the preceding claims referring to a manufacturing method, further comprising
b) molding at least two complementary channel parts (142) in at least one molding process by using two channel cavity molding tools; and
c) snap connecting the two complementary channel parts (142), thereby generating the drainage channel (140); and
d) connecting the drainage channel (140) to the cowl element (124).

13. The method according to the preceding claim, wherein the molding process of step b) is one or more of an injection molding process; a compression molding process; a transfer molding process; a thermoforming process.

14. A vehicle (110) comprising a windshield (114), at least one fluid inlet (116) configured for transporting fluid towards at least one windshield wiper (118), a hood (120), two body sidewalls (122) and at least one cowl system (112) according to any one of the preceding claims referring to a cowl system (112), wherein the cowl system (112) is positioned between the windshield (114) and the hood (120) of the vehicle (110), wherein the cowl system (112) is connected to the body sidewalls (122) via the cowl system's snap fit joints (126) and wherein the at least one fluid inlet (116) is fastened in the fixing element (128).

15. A vehicle manufacturing method configured for manufacturing at least one vehicle (110) according to the preceding claim, comprising
A) performing the method for manufacturing at least one cowl system (112) according to any one of the preceding method claims;
B) snap fit connecting the cowl system (112) to the two body sidewalls (122) of the vehicle (110), thereby pressing a sealing lip (136) of the cowl system (112) onto the windshield (114) of the vehicle (110); and
C) fastening, in the fixing element (128), at least one fluid inlet (116) of the vehicle (110) configured for transporting fluid towards at least one windshield wiper (118).
